# FASCICULE DE BREVET EUROPEEN

(11) **EP 2 565 783 B1**
(45) Date de publication et mention de la délivrance du brevet: **13.08.2014**
(21) Numéro de dépôt: 11191002.2
(22) Date de dépôt: 28.11.2011
(51) Int. Cl.: G06F 9/44

(54) **Groupes d'applications contextualisés pour terminal de communication**
Gruppen von kontextualisierten Anwendungen für Kommunikationsendgerät
Groups of contextualised applications for a communication terminal

(30) Priorité: 05.09.2011 FR 1157830
(43) Date de publication de la demande: 06.03.2013
(73) Titulaire: Alcatel Lucent, 92100 Boulogne-Billancourt (FR)
(72) Inventeur: Kostadinov, Dimitre Davidov, 91620 Nozay (FR); Senot, Christophe, 91620 Nozay (FR); Toms, Yann, 91620 Nozay (FR); Rebierre, Nicolas, 91620 Nozay (FR)
(74) Mandataire: Mouney, Jérôme

(56) Documents cités:
- WO-A1-2006/111409
- WO-A2-02/099597
- GUILING WANG ET AL: "A Context Model for Collaborative Environment", COMPUTER SUPPORTED COOPERATIVE WORK IN DESIGN, 10TH INTERNATIONAL CONF ERENCE ON, IEEE, PI, 1 mai 2006 (2006-05-01), pages 1-6, XP031021163, ISBN: 978-1-4244-0164-2
- VANINHA VIEIRA ET AL: "Using a metamodel to design structural and behavioral aspects in context-sensitive groupware", COMPUTER SUPPORTED COOPERATIVE WORK IN DESIGN (CSCWD), 2010 14TH INTERNATIONAL CONFERENCE ON, IEEE, PISCATAWAY, NJ, USA, 14 avril 2010 (2010-04-14), pages 59-64, XP031680899, ISBN: 978-1-4244-6763-1

## Description

La présente invention est relative à la gestion des applications logicielles accessibles sur un terminal de communication. Elle concerne également le partage de groupes d'applications logicielles entre utilisateurs.

Ces terminaux de communication sont typiquement des « téléphones intelligents » (ou *smartphones*), des assistants personnels numériques (ou PDA pour *Personal Digital Assistant* » en langue anglaise), etc. Ces terminaux de communication ont pour caractéristique de permettre à l'utilisateur d'installer des applications logicielles disponibles sur le réseau internet.

Ces applications logicielles sont disponibles en très grand nombre. Les applications logicielles disponibles à l'été 2011 sur les deux systèmes d'exploitation les plus communs, Android de la société Google et iOS de la société Apple, avoisinent les 450000 pour chaque plateforme.

Il est donc difficile pour l'utilisateur de faire un choix d'une application correspondant à ses réels besoins, et cette difficulté ira croissant en l'absence de solution technique le guidant dans ses choix.

En outre, installer un trop grand nombre d'applications logicielles peut engendrer deux familles de nouveaux problèmes :
- ces applications consomment des ressources du terminal de communication (mémoire vive, mémoire de masse, temps CPU...)
- il devient également difficile pour l'utilisateur de naviguer à travers ces applications et de retrouver celle dont il a besoin à un instant donné.

De telles solutions d'aide ont été proposées.

Le système iOS propose en natif de grouper les applications installées et d'affecter une étiquette à ces groupes.

Ce mécanisme est toutefois sommaire puisque une application ne peut être affectée qu'à une seule étiquette. L'utilisateur doit de surcroit manuellement sélectionner une étiquette pour accéder à l'ensemble d'applications associés. Ce mécanisme oblige donc l'utilisateur à bien connaître ses étiquettes afin de choisir celle qui lui donnera accès à l'application souhaitée.

En outre, cette solution ne vise qu'à résoudre l'organisation des applications au sein du terminal de communication et non pas la détermination de nouvelles applications susceptibles d'être installées.

Une autre solution est fournie par l'application « App Organizer » fonctionnant sur le système d'exploitation Android. L'utilisateur peut affecter plusieurs étiquettes à une application et poser un raccourci vers une étiquette sur l'interface graphique. Il peut ainsi sélectionner un raccourci et accéder ainsi rapidement à un ensemble d'applications.

Ce mécanisme reste toutefois manuel puisque l'utilisateur doit sélectionner une étiquette et donc mémoriser l'étiquette qui lui donne accès aux applications voulues. Cette solution ne résout pas non plus le problème de la détermination de nouvelles applications.

Le document GUILING WANG ET AL : « A Context Model for Collaborative Environment », COMPUTER SUPPORTED COOPERATIVE WORK IN DESIGN, 10TH INTERNATIONAL CONFERENCE ON, IEE,. PI, 1 mai 2006 (2006-05-01), pages 1-6, décrit un système de travail en cooperation supporté par ordinateur.

Le but de l'invention est d'améliorer la situation en automatisant au moins une partie de la gestion des applications logicielles accessibles sur un terminal de communication.

Plus précisément, l'invention a pour premier objet un procédé de gestion d'un ensemble d'applications accessibles sur un terminal de communication, comportant tes étapes suivantes :
- une étape de constitution d'au moins un groupe d'applications par la sélection d'une ou plusieurs applications et l'affectation de cette ou de applications à un groupe, parmi le ou les groupes d'applications constitués.
- Une étape d'association du ou des groupes d'applications à un contexte déterminé par l'utilisateur du terminal de communication, pour former au moins un groupe d'applications contextualisé,
- Une étape de mémorisation de ce ou de ces groupes d'applications contextualisés dans une base de données ,
- Une étape de détermination d'un contexte dynamique à partir d'informations contextuelles fournies par le terminal de communication,
- Une étape de récupération dans la base de données d'un ensemble de groupes d'applications contextualisés correspondant à ce contexte dynamique,
- Une étape de présentation à l'utilisateur de cet ensemble de groupes d'applications contextualisés.

L'invention a également pour objet un terminal de communication disposant de moyens de traitement prévus pour mettre en oeuvre des applications et disposant d'une interface graphique permettant la constitution d'au moins un groupe d'applications par la sélection d'une ou plusieurs applications et l'affectation de cette ou de ces applications à un groupe parmi l'au moins un groupe d'applications. Ce terminal comporte en outre :
- des moyens pour associer l'au moins un groupe d'application à un contexte déterminé par l'utilisateur du terminal de communication, pour former au moins un groupe d'applications contextualisé,
- une base de données pour mémoriser ce ou ces groupse d'applications contextualisés,
- des moyens pour déterminer un contexte dynamique à partir d'informations contextuelles,
- des moyens pour récupérer dans la base de données un ensemble de groupes d'applications contextualisés correspondant à ce contexte dynamique,

L'interface graphique est en outre prévue pour présenter à l'utilisateur cet ensemble de groupes d'applications contextualisés.

Ainsi, sans intervention de l'utilisateur, celui-ci se voit présenter un ensemble de groupes d'applications en fonction du contexte dans lequel il se trouve. Il est affranchi des étapes manuelles de navigation au sein d'un grand nombre d'applications logicielles et a directement accès aux applications correspondant le mieux aux besoins du moment.

Selon des modes de réalisation, l'invention peut également comporter
- la transmission à un autre utilisateur d'un groupe d'application contextualisé,
- le traitement de ce groupe d'applications contextualisé par un terminal de communication de l'autre utilisateur afin d'adapter le contexte associé à ce groupe à des informations propres à l'autre utilisateur.

Les informations contextuelles peuvent comprendre un ou plusieurs éléments parmi la localisation du terminal de communication, l'heure courante, et une information fournie par l'utilisateur.

La base de données peut être localisée sur un ou plusieurs serveurs accessibles du terminal de communication par un réseau de télécommunication, afin de permettre le partage avec au moins un autre terminal de communication utilisable par l'utilisateur.

La présentation à l'utilisateur peut consister en un affichage d'éléments graphiques correspondant aux applications dans une portion prédéfinie de l'interface graphique du terminal de communication.

Il est également possible de mettre en oeuvre une étape de récupération d'un deuxième ensemble de groupes d'applications contextualisés à partir d'une base de données associés à un second utilisateur.

Avant d'être présenté audit utilisateur, ce deuxième ensemble peut faire l'objet d'un traitement afin d'adapter le contexte associé au groupe à des informations propres à l'utilisateur.

L'utilisateur et le second utilisateur peuvent être liés par un réseau social et la récupération du deuxième ensemble peut être effectuée dynamiquement.

Le deuxième ensemble peut être transmis à la demande expresse du second utilisateur.

L'invention et ses avantages apparaîtront de façon plus claire dans la description qui va suivre en liaison avec les figures annexées.
La figure 1 représente le contexte dans lequel peut s'inscrire l'invention.
La figure 2 est un organigramme simplifié illustrant le procédé selon l'invention.
La figure 3 schématise grossièrement un terminal de communication mettant en oeuvre l'invention.
La figure 4 schématise une mise en oeuvre possible pour les structures de données utiles à l'invention.

L'invention est particulièrement prévue pour être mise en oeuvre sur un terminal de communication relié à un réseau de communication par une liaison sans fil de type 3G, 4G, Wifi, etc. Ce réseau de communication est typiquement le réseau public « internet ».

Elle est toutefois susceptible d'être déployée dans un contexte différent, notamment avec une liaison filaire et/ou avec un réseau de communication privé, notamment un réseau d'entreprise.

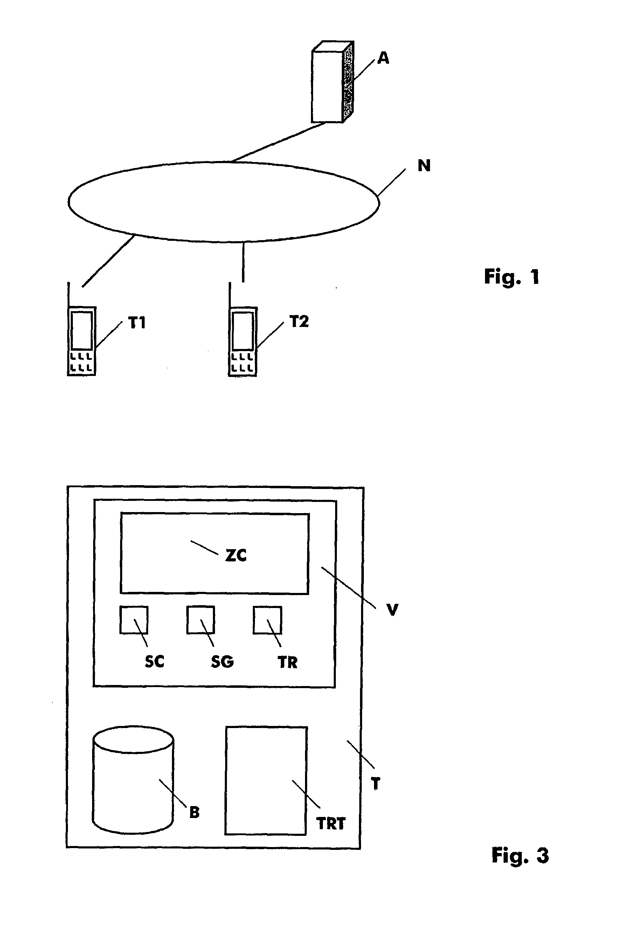

La figure 1 illustre une mise en oeuvre dans laquelle deux terminaux de communication T1 et T2 sont reliés à un réseau de communication N. Ce réseau de communication N est le réseau dit « internet » et à travers lui, les terminaux de communication T1, T2 peuvent accéder à des applications logicielles disponibles sur un serveur d'applications A.

De façon connue en soi, l'utilisateur peut choisir une application logicielle disponible sur le serveur d'applications A, la télécharger et l'installer sur son terminal de communication. Le choix peut notamment se faire via des sites web consacrés faisant office de place de marché (android market, Apple Store, etc.) dans lequel l'utilisateur doit naviguer selon des catégories pour repérer l'application logicielle souhaitée. Le choix effectué sur le site, le téléchargement et l'installation sont généralement automatiques et transparentes pour l'utilisateur,

Ces applications logicielles installées sont disponibles localement sur le terminal de communication via son interface graphique : chaque application est représentée par une icône dont l'activation lance l'application associée. Les applications sont disponibles sur une ou plusieurs pages écran.

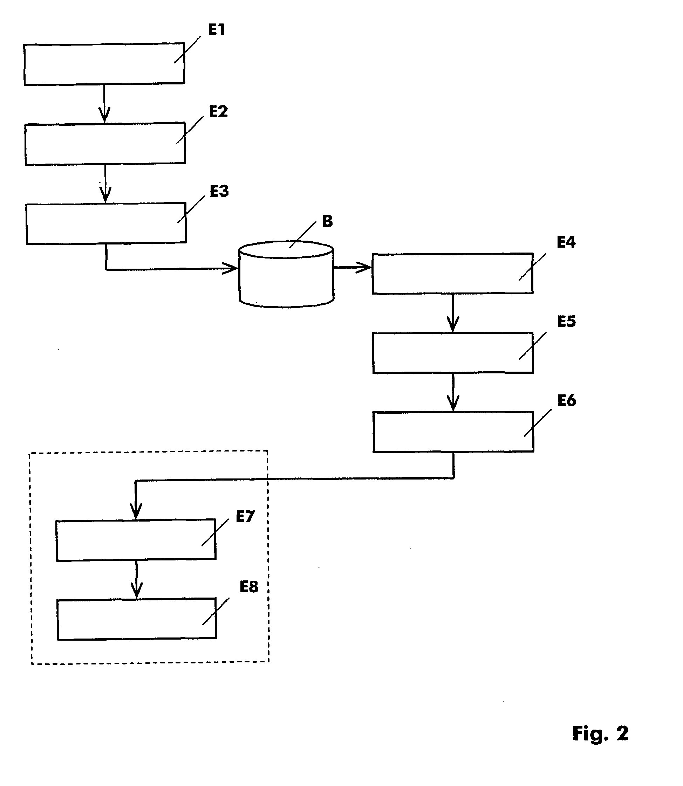

Selon l'invention, il est possible de constituer un groupe d'applications en sélectionnant une ou plusieurs applications logicielles parmi ces applications installées, et en l'affectant (ou en les affectant) à ce groupe. Plusieurs groupes peuvent être ainsi constitués. Cette étape est référencée E1 sur l'organigramme représenté sur la figure 2.

Il sera vu ultérieurement que les groupes peuvent également contenir des applications logicielles non installées.

La sélection et l'affectation peuvent être des sous-étapes manuelles, réalisées via l'interface homme-machine du terminal.

Par exemple, l'utilisateur peut sélectionner l'icône d'une application logicielle est effectuer un glisser-déposer vers une zone de l'écran correspondant à un groupe d'applications. Cette zone peut être une simple icône ou bien un espace destiné à recevoir les icônes des applications logicielles appartenant au groupe.

Une autre possibilité peut être d'ouvrir un menu contextuel à la sélection d'une icône d'application et de proposer parmi les choix du menu contextuel l'affectation de l'application à un groupe d'applications.

La sélection et l'affectation peuvent être également effectuées par mots-clés.

L'utilisateur peut associer des mots-clés aux applications logicielles installées. Elles peuvent en outre posséder des mots-clés fournis par le développeur ou par le distributeur. De façon automatique, ces mots-clés peuvent être utilisés pour créer des groupes d'applications et y affecter les applications.

Il est par exemple possible de créer un groupe pour chaque mot-clé, ou bien pour chaque mot-clé dont l'occurrence parmi les applications logicielles installées est suffisamment importante, ou bien pour des mots-clés préalablement déterminés par l'utilisateur, etc.

Il peut être fait appel à une ontologie afin de réunir dans un même groupe des applications logicielles associées à des mots-clés ayant une certaine proximité sémantique et thématique. En effet, tant l'utilisateur que le développeur ou le distributeur peuvent utiliser des mots-clés différents mais ayant le même sens pour des applications distincts.

L'ontologie peut également résoudre les problèmes de langues. Il est ainsi possible d'avoir automatiquement un même groupe réunissant des applications ayant les mots-clés « jeu » et « game ».

La sélection et l'affectation peut également se faire par l'utilisation d'un contexte.

Un contexte est déterminé directement ou indirectement par l'utilisateur.

Celui-ci peut définir expressément un contexte en précisant un nom de contexte et des informations contextuelles.

Ces informations contextuelles peuvent comprendre la localisation du terminal de communication, l'heure courante, une combinaison de la localisation et de l'heure. D'autres paramètres sont bien évidemment possibles : vitesse de déplacement du terminal, état de l'écran, etc.

Un utilisateur peut ainsi définir des contextes associés à des activités récurrentes de son style de vie. Par exemple, il peut définir des contextes « travail », « transport », « maison », « week-end », « maison de campagne », etc. Ces contextes peuvent être définis par la localisation, mais l'heure peut distinguer entre un contexte « week-end » et « maison » ou bien entre « maison » et « télétravail » par exemple.

Les autres informations contextuelles peuvent permettre également de définir des contextes : par exemple, la vitesse de déplacement peut indiquer que l'utilisateur se déplace en voiture ou en train, et un contexte « voyage » peut y être associé.

L'utilisateur peut également définir un contexte par son comportement.

Ainsi, l'invention peut comprendre une étape et des moyens pour analyser le comportement de l'utilisateur sur une certaine durée, typiquement plusieurs jours, afin de déterminer des invariants. Il est ainsi possible de déterminer des localisations ou des couples localisation/heures correspondant à des contextes. Par exemple, si l'utilisateur est toujours localisé au même endroit aux mêmes heures de la journée, un contexte peut être créé.

Un nom peut ensuite être donné par l'utilisateur aux contextes ainsi automatiquement créées, ou bien un nom automatique peut être généré. Ce nom peut être simplement une étiquette indiquant un identifiant de la localisation et de l'horaire, ou peut être fourni par des modèles de contexte.

Un modèle de contexte peut être une structure basée sur des comportements moyens d'un grand nombre d'utilisateur. Par exemple, un modèle de contexte peut indiquer qu'une localisation fixe entre 9h00 et 18h00 correspond à un contexte « travail », et qu'une localisation fixe en période de nuit correspond à un contexte « maison ».

L'invention peut comporter une étape et des moyens pour analyser pareillement le lancement des applications.

Lors de chaque lancement d'une application logicielle, on peut mémoriser la localisation, l'heure ou tout autre information. En étudiant le comportement de l'utilisateur sur une certaine durée, typiquement plusieurs jours, il est possible de dégager des lignes générales. Par exemple, plusieurs applications sont lancées uniquement pour une localisation donnée, ou pendant un intervalle horaire donnée.

Il est alors possible de déclencher la création automatique d'un groupe réunissant les applications logicielles en question, et de les y affecter.

La seconde étape E2 du précédé selon l'invention consiste à associer le (ou les) groupe d'application ainsi constitué à un contexte. Ces associations seront appelées dans la suite des groupes d'applications contextualisés.

Dans certaines des mises en oeuvre exposées ci-dessus, cette étape découle naturellement de la précédente et sont d'une certaine façon concomitantes.

Dans d'autres mises en oeuvre exposées ci-dessus, toutefois, cette étape peut être déclenchée en séquence. Il s'agit de la mise en oeuvre selon laquelle l'utilisateur crée explicitement les groupes, et de celles où les groupes sont créées par association de mots-clés. En effet, dans ces deux cas, la constitution des groupes est indépendant du contexte et il doit être procédé ensuite à une association à un ou plusieurs contextes.

Il est à noter que ces associations peuvent être de type N-N. Autrement dit, un contexte peut être associé à plusieurs groupes d'applications contextualisés, et un même groupe d'applications peut être associés à plusieurs contextes.

Il peut toutefois être considéré que cette dernière situations ne correspondent pas à une gestion optimale des ressources du terminal de communication. Il peut alors être proposé de répartir les applications d'un tel groupe dans des groupes plus spécifiquement associés aux différents contextes. Ainsi, si un groupe est associé à la fois à un premier contexte et à un second contexte, il peut être supprimé et les applications peuvent être associés à la fois à un premier groupe (préalablement existant) associé au premier contexte et au second groupe (préalablement existant) associé au second contexte. Cette fonctionnalité permet de limiter le nombre de groupe d'applications.

La première situation peut être utile pour organiser un nombre trop important d'applications associées à un même contexte. Mais le système peut proposer des moyens d'aide pour gérer cette situation. Notamment, il peut être proposé de fusionner les groupes associés à un même contexte.

Il peut également être proposé d'analyser plus finement les informations disponibles afin de définir des sous-contextes distincts au sein du contexte.

Par exemple, un contexte « travail » peut, après analyse, faire ressortir des comportements différents le matin de l'après-midi, et il peut être proposé de constituer deux contextes distincts, « travail - matin » et « travail - après-midi », correspondant à des groupes d'applications contextualisés distincts.

En mettant en oeuvre ces mécanismes de contrôle des groupes d'applications, il peut être possible d'obtenir des associations 1-1 entre contexte et groupes d'applications contextualisés.

Des associations 1-1 peuvent en effet permettre de lever l'ambiguité des associations contextes-applications aussi bien pour l'utilisateur que pour le système. Ainsi, l'utilisateur peut exactement savoir quelles applications sont pertinentes dans chacun de ses contextes et le système peut choisir sans ambiguité le groupe d'applications à proposer pour chacun des contextes de l'utilisateur.

Un autre avantage d'avoir des contextes très spécifiques est de cibler précisément le besoin de l'utilisateur et de limiter le nombre d'applications logicielles à lui proposer. En effet, en créant des contextes très généraux, le(s) groupe(s) d'applications associés contiendraient beaucoup d'applications et on risquerait se retrouver dans le même cas qu'unitialement (difficulté pour l'utilisateur de distinguer entre applications pertinentes et non pertinentes.)

La troisième étape E3 du procédé selon l'invention consiste à mémoriser ces groupes d'applications contextualisés dans une base de données B.

Cette base de données peut être localisée dans la mémoire du terminal de communication. La figure 3 montre bien la présence de cette base de données B au sein du terminal de communication T.

Elle peut également être synchronisée avec une base distante permettant de partager un même profil et les mêmes groupes d'applications contextualisées entre plusieurs terminaux de communication utilisable par le même utilisateur.

Celui-ci peut ainsi utiliser indifféremment un téléphone de type « smartphone » ou bien une tablette numérique, selon son désir, et y retrouver les mêmes contextes.

Il peut également être choisi d'exploiter le type de terminal comme une information contextuelle supplémentaire. En effet, l'utilisateur peut utiliser des applications logicielles différentes en fonction du type de terminal de communication.

Ce choix d'utiliser le type de terminal de communication comme information contextuelle est bien évidemment une option de mise en oeuvre et peut également être proposé comme une option à l'utilisateur.

Il existe différentes mises en oeuvre de la mémorisation d'un groupe d'applications contextualisé au sein de la base de données.

On peut par exemple définir trois structures de données.
- une structure définissant les contextes, contenant un identifiant de contexte, éventuellement un nom (pour présentation à l'utilisateur), et des informations contextuelles (localisation, plage horaire, etc.)
- une structure définissant un groupe d'applications, contenant un identifiant de groupe, éventuellement un nom (pour présentation à l'utilisateur), et des identifiants d'applications logicielles.
- Une structure définissant un groupe d'applications contextualisé, contenant un identifiant de groupe contextualisé, éventuellement un nom (pour présentation à l'utilisateur), un identifiant de contexte et un identifiant de groupe.

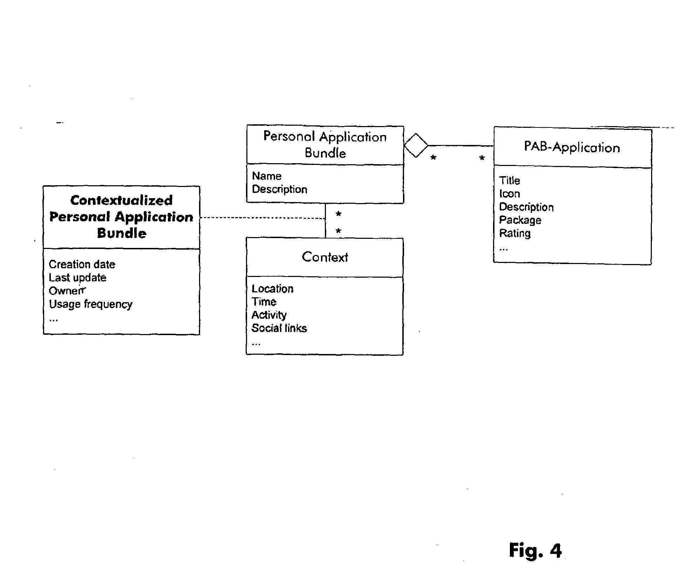

La figure 4 schématise une telle mise en oeuvre, et comportant en outre une structure associée à chaque application. L'acronyme PAB signifie « *Personal Application Bundle* » et représente un groupe d'applications.

Selon une autre mise en oeuvre, une seule structure peut être définie contenant:
- un identifiant de groupe d'applications contextualisé,
- éventuellement un nom (pour présentation à l'utilisateur),
- des informations contextuelles (localisation, plage horaire, etc.)
- des identifiants d'applications logicielles.

D'autres mises en oeuvre sont bien évidemment possibles. Il est également possibles d'ajouter des informations dans ces structures de données.

Ces trois premières étapes, E1, E2, E3 forment en quelque sorte l'initialisation du système. Elle vise à provisionner la base de données B.

Les étapes suivantes, E4, E5, E6 consistent à exploiter le contenu de cette base de données B. Ces deux séries d'étapes ne forment toutefois pas nécessairement des phases successives : d'une façon générale, l'utilisateur peut alterner entre ces deux phases. Utiliser des applications logicielles appartenant à un groupe d'applications contextualisé, puis affecter une nouvelle application logicielle à un groupe existant ou bien constituer un nouveau groupe, etc.

Pour cette raison, la figure 2 fait ressortir deux enchaînements distincts : E1, E2, E3 et E4, E5, E6.

La quatrième étape E4 du procédé selon l'invention consiste à déterminer un contexte dynamique à partir d'informations contextuelles fournies par le terminal de communication T.

Le contexte dynamique est le contexte dans lequel se situe l'utilisateur du terminal à l'instant précis où il est déterminé. Il est déterminé à partir d'informations contextuelles qui peuvent être similaires ou identiques à celles préalablement évoquées : localisation du terminal de communication T, heure courante, etc.

En fonction de ces informations contextuelles, le terminal de communication T peut déterminer un contexte correspondant parmi ceux préalablement déterminés (à l'étape E2).

Cette détermination peut être effectuée sur des critères stricts mais une certaine flexibilité peut évidemment être apportée. Par exemple, sur l'heure courante, si un contexte « Travail » est associé à une plage horaire 8h00-18h00, une information contextuelle de 7h55 pourra déterminer un contexte dynamique « travail » si, par ailleurs, la localisation dynamique correspond effectivement à la localisation connue du lieu de travail.

Également, une information fournie par l'utilisateur peut aider à déterminer le contexte dynamique.

Cette information peut être entrée par l'utilisateur au moyen d'une icône dans l'interface graphique du terminal de communication, d'un bouton du terminal de communication, d'une commande vocale etc.

Dans l'exemple de terminal de communication T de la figure 3, un moyen d'action SC est prévu au sein du moyen de visualisation V. Il peut s'agir d'une icône ou de toute autre zone tactile de l'écran.

Il peut ainsi être possible de prévoir que l'utilisateur lui-même puisse déterminer le contexte dans lequel il souhaite être. Cette possibilité peut être complémentaire des déterminations automatiques indiquées précédemment. Par exemple, un utilisateur en transit dans un aéroport peut souhaiter profiter de ce temps libre pour travailler et forcer le contexte dynamique dans son contexte « travail ».

Également, il peut éventuellement survenir des ambiguïtés dans la détermination automatique d'un contexte dynamique. En effet, si d'autres informations contextuelles sont utilisées en sus de la localisation et du temps, la situation peut devenir complexe et il peut arriver que plusieurs contextes correspondent à un même ensemble d'informations contextuelles. Il peut alors être possible de déterminer des priorités entre les informations contextuelles (par exemple, la localisation peut l'emporter sur l'heure...), mais il peut être prévu de présenter à l'utilisateur les différents contextes possibles afin qu'il choisisse lui-même celui qui correspond le mieux à ce qu'il souhaite faire. Cette information peut être entrée par l'utilisateur de la même façon que précédemment.

L'étape E5 consiste à récupérer dans la base de donnée B de l'ensemble des groupes d'applications contextualisés correspondant au contexte dynamique déterminé à l'étape précédente.

Cet ensemble de groupes d'applications contextualisés peut n'être composé que d'un seul groupe.

Le contexte dynamique et les contextes peuvent être identifiés par un identificateur unique. Il suffit alors d'effectuer une recherche dans la base B des entrées possédant cet identificateur.

Il peut être choisi d'utiliser un système de mots-clés. Chaque contexte est déterminé par un ensemble de mots-clés. Par exemple, un ensemble « Travail », « Alcatel-Lucent », « Villarceaux »... peut être associé à un contexte de travail.

La détermination du contexte dynamique fournir un deuxième ensemble de mots-clés. Ce deuxième ensemble peut être identique ou différent. Il peut être différent si par exemple l'utilisateur travaille en dehors de sa localisation habituelle ou si l'utilisateur possède plusieurs employeurs, etc.

La recherche dans la base de données peut alors consister à déterminer les entrées correspondant au mieux aux mots clés fournis et éventuellement d'effectuer un tri pour proposer préférentiellement celles fournissant la meilleure mise en correspondance.

L'étape E6 consiste à présenter cet ensemble de groupes à l'utilisateur.

La présentation peut être réalisée par l'affichage d'éléments graphiques (icônes...) correspondant aux applications à un groupe d'applications contextualisé dans une portion ZC prédéfinie de l'interface graphique V du terminal de communication T.

S'il existe plusieurs groupes d'applications contextualisés, la portion ZC peut représenter des éléments graphiques représentants ces groupes à la place des applications. Un moyen d'action SG peut permettre à l'utilisateur de sélectionner un groupe parmi les différents groupes d'applications contextualisés correspondant à son contexte dynamique. Le choix effectué, les icônes des applications contenues dans le groupe sélectionné peuvent alors s'afficher.

Bien évidemment, lorsqu'un seul groupe est associé au contexte dynamique, les applications correspondante peuvent s'afficher directement sans qu'il soit nécessaire à l'utilisateur d'effectuer une sélection. Les moyens d'actions SG peuvent, dans ce cas, être inopérants ou masqués.

Selon un mode de réalisation de l'invention, un mécanisme de partage de groupes d'applications peut être prévu.

En effet, la configuration d'un groupe d'applications et d'un groupe d'applications contextualisés sont des tâches longues. Notamment, repérer une application logicielle parmi les milliers d'applications disponibles et déterminer dans quelles situations (c'est-à-dire dans quels contextes) elle peut être utile sont des tâches à valeur ajouté.

Aussi, afin d'exploiter au mieux la valeur ajouté apporté par les utilisateurs, une mise en oeuvre de l'invention consiste à permettre aux utilisateurs d'exporter et d'importer les groupes d'applications contextualisés.

Pour ce faire, le procédé selon l'invention peut comporter deux nouvelles étapes :
- Une étape E7 de transmission à un autre utilisateur d'un groupe d'applications contextualisés
- une étape E8 de traitement de ce groupe par un terminal de communication de cet autre utilisateur, afin d'adapter le contexte associé à ce groupe aux informations propres à l'autre utilisateur.

La transmission peut se faire par tous moyens de communication possibles. Il peut s'agir notamment de la transmission de structures de données telles que décrites précédemment, et par exemple, telles qu'illustrées en figure 4. Il peut également s'agir de l'adresse de telles structures si celles-ci sont répliquées dans une base située sur un serveur.

Cette étape peut être déclenchée par différents mécanismes.

Un moyen d'action spécifique TR peut être disponible sur l'interface graphique V afin de permettre à l'utilisateur de partager le groupe d'applications contextualisés en cours (celui qui est affiché dans la portion ZC). Son actionnement peut déclencher l'affichage du carnet de contacts de l'utilisateur afin de lui permettre de sélectionne le ou les utilisateurs vers lesquels il souhaite transmettre le groupe.

L'interface de messagerie (courrier électronique, SMS, « Instant Messaging »...) peut également permettre d'insérer dans un message sortant les informations relatives à un groupe d'applications contextualisé. Ces informations peuvent être de même nature que celle du cas précédent, et peuvent être attachés au message selon le protocole propre au type de message (protocole MIME...)

Également, la transmission peut se faire dans le cadre d'un réseau social. L'utilisateur peut partager les informations relatives à un groupe d'applications contextualisés, d'une façon similaire au partage d'éléments multimédia (photos, vidéos... ), textuels ou liens internet.

Les utilisateurs peuvent récupérer ainsi des deuxièmes ensembles de groupes d'applications contextualisés à partir des bases de données B constituées par les autres utilisateurs et partagées.

La récupération de ce groupe d'applications contextualisés peut être effectuée dynamiquement, lorsque deux utilisateurs sont liés par un réseau social. La mise à jour peut être notifiée préalablement à l'utilisateur afin de lui permettre de valider ou non cette mise à jour.

Il peut même alors être prévu qu'une mise à jour d'un groupe applicatif contextualisé ainsi mis en commun par un des utilisateurs se répercute automatiquement et de façon transparente à l'autre utilisateur.

La récupération peut alternativement être transmis à la demande expresse de l'utilisateur (envoi d'un message, activation d'un moyen de commande... ).

Le traitement mis en oeuvre par l'étape E8 vise à adapter les données personnelles de l'utilisateur. Ainsi, si un premier utilisateur A transmet à un second un groupe d'applications lié à un contexte « travail », le terminal du second utilisateur peut automatiquement affecter le groupe à un contexte travail existant ou bien le créer. Les paramètres (informations contextuelles) associés à ce contexte sont propres à ce second utilisateur.

Les applications du groupe contextualisées récupérées peuvent correspondre à des applications déjà installées dans le terminal ou, cas le plus général, à des applications non encore installées.

Dans ce cas, elles peuvent être représentées sur l'interface graphique V avec une symbolique particulière. Par exemple, leurs icônes peuvent être grisées, ou avec des couleurs plus claires. Elles peuvent être adjointe d'une petite image indiquant que l'application n'esgt pas encore installée.

La sélection d'une telle application peut renvoyer l'utilisateur avec un site web (marché) sur lequel il peut provoquer l'installation de l'application en question.

Il est également possible de déclencher l'installation de l'ensemble des applications du groupe contextuel récupéré. Un moyen d'action peut être prévu en ce sens, pour que l'utilisateur ayant récupéré un groupe d'applications contectuel dont il est assuré de la pertinence puisse télécharger les applications en une seule manoeuvre.

Il peut par ailleurs être prévu que les moyens de traitement TRT soient adaptés pour comparer les applications du groupe contextuel récupéré et les applications déjà installées. De cette façon, on pourrait remplacer une application "importée" (c'est-à-dire, d'un groupe contextuel récupéré) par une application déjà installée présentant les mêmes fonctions et/ou étant considérée comme équivalente.

Ces traitements peuvent être mis en oeuvre par des moyens de traitement TRT embarqués dans le terminal de communication. Ces moyens TRT sont composés de microprocesseurs, circuits spécialisés, mémoires etc. de façon classique et connue en soi. Ils sont prévus pour mettre en oeuvre d'autres étapes du procédé de l'invention précédemment décrit nécessitant un traitement de données, ainsi que les autres fonctions déployées sur le terminal de communication.

Ces moyens de traitement permettent de mettre en oeuvre aussi les applications logicielles téléchargées.

## Revendications

1. Procédé de gestion d'un ensemble d'applications accessibles sur un terminal de communication, **caractérisé en ce que** le procédé comporte les étapes suivantes :
- une étape (E1) de constitution d'au moins un groupe d'applications par la sélection d'une ou plusieurs applications et l'affectation de ladite une ou plusieurs applications à un groupe parmi ledit au moins un groupe d'applications.
- Une étape (E2) d'association dudit au moins un groupe d'application à un contexte déterminé par l'utilisateur dudit terminal de communication, pour former au moins un groupe d'applications contextualisé,
- Une étape (E3) de mémorisation dudit au moins groupe d'applications contextualisé dans une base de données,
- Une étape (E4) de détermination d'un contexte dynamique à partir d'informations contextuelles fournies par ledit terminal de communication,
- Une étape (E5) de récupération dans ladite base de données d'un ensemble de groupes d'applications contextualisés correspondant audit contexte dynamique,
- Une étape (E6) de présentation audit utilisateur dudit ensemble de groupes d'applications contextualisés.

2. Procédé selon la revendication précédente, comportant en outre des étapes de
- transmission à un autre utilisateur d'un groupe d'application contextualisé,
- traitement dudit groupe d'applications contextualisé par un terminal de communication dudit autre utilisateur afin d'adapter le contexte associé audit groupe à des informations propres audit autre utilisateur.

3. Procédé selon l'une des revendications précédentes, dans lequel lesdites informations contextuelles comprennent un ou plusieurs éléments parmi la localisation dudit terminal de communication, l'heure courante, et une information fournie par l'utilisateur.

4. Procédé selon l'une des revendications précédentes, dans lequel ladite base de données est localisée sur un ou plusieurs serveurs accessibles du terminal de communication par un réseau de télécommunication, afin de permettre le partage avec au moins un autre terminal de communication utilisable par ledit utilisateur.

5. Procédé selon l'une des revendications précédentes, dans lequel ladite présentation consiste en un affichage d'éléments graphiques correspondant auxdites applications dans une portion prédéfinie de l'interface graphique dudit terminal de communication.

6. Procédé selon l'une des revendications précédentes, comportant en outre un étape de récupération d'un deuxième ensemble de groupes d'applications contextualisés à partir d'une base de données associés à un second utilisateur.

7. Procédé selon la revendication précédente, dans lequel avant d'être présenté audit utilisateur, ledit deuxième ensemble fait l'objet d'un traitement afin d'adapter le contexte associé audit groupe à des informations propres audit utilisateur.

8. Procédé selon l'une des revendications 6 ou 7 dans lequel ledit utilisateur et ledit second utilisateur sont liés par un réseau social et dans lequel la récupération dudit deuxième ensemble est effectuée dynamiquement.

9. Procédé selon l'une des revendications 6 ou 7, dans lequel ledit deuxième ensemble est transmis à la demande expresse dudit second utilisateur.

10. Terminal de communication (T) disposant de moyens de traitement (TRT) prévus pour mettre en oeuvre des applications, **caractérisé en ce qu'**il dispose d'une interface graphique (V) permettant la constitution d'au moins un groupe d'applications par la sélection d'une ou plusieurs applications et l'affectation de ladite une ou plusieurs applications à un groupe parmi ledit au moins un groupe d'applications, ledite terminal possédant en outre des moyens (TRT, V) pour associer ledit au moins un groupe d'application à un contexte déterminé par l'utilisateur dudit terminal de communication, pour former au moins un groupe d'applications contextualisé, une base de données (B) pour mémoriser ledit au moins un groupe d'applications contextualisé, des moyens (TRT, V) pour déterminer un contexte dynamique à partir d'informations contextuelles, des moyens pour récupérer dans ladite base de données un ensemble de groupes d'applications contextualisés correspondant audit contexte dynamique, et ladite interface graphique étant prévue pour présenter audit utilisateur ledit ensemble de groupes d'applications contextualisés.

11. Programme d'ordinateur disposant de moyens pour mettre en oeuvre le procédé selon l'une des revendications 1 à 9.

## Patentansprüche

1. Verfahren zur Verwaltung eines Satzes von auf einem Kommunikationsendgerät zugänglichen Anwendungen, **dadurch gekennzeichnet, dass** das Verfahren die folgenden Schritte umfasst:
- Einen Schritt (E1) des Bildens zumindest einer Gruppe von Anwendungen durch Auswählen einer oder mehrerer Anwendungen und Zuordnen der besagten einen oder mehreren Anwendungen zu einer Gruppe unter den besagten mindestens einen Anwendungsgruppen,
- einen Schritt (E2) des Assoziierens der besagten mindestens einen Anwendungsgruppe mit einem vom Benutzer des besagten Kommunikationsendgeräts bestimmten Kontext, um mindestens eine kontextbezogene Anwendungsgruppe zu bilden,
- einen Schritt (E3) des Speicherns der besagten mindestens einen kontextbezogenen Anwendungsgruppe in einer Datenbank,
- einen Schritt (E4) des Ermittelns eines dynamischen Kontextes aus den von dem besagten Kommunikationsendgerät bereitgestellten kontextbezogenen Informationen,
- einen Schritt (E5) des Rückgewinnens eines Satzes von kontextbezogenen Anwendungsgruppen, welcher dem besagten dynamischen Kontext entspricht, in der besagten Datenbank,
- einen Schritt (E6) des Darstellens des besagten Satzes von kontextbezogenen Anwendungsgruppen für den besagten Benutzer.

2. Verfahren nach dem vorstehenden Anspruch, weiterhin die folgenden Schritte umfassend:
- Übertragen einer kontextbezogenen Anwendungsgruppe an einen anderen Benutzer,
- Verarbeiten der besagten kontextbezogenen Anwendungsgruppe durch ein Kommunikationsendgerät des besagten anderen Benutzers, um den mit der besagten Gruppe assoziierten Kontext an die dem besagten anderen Benutzer eigenen Informationen anzupassen.

3. Verfahren nach einem der vorstehenden Ansprüche, wobei die besagten kontextbezogenen Informationen ein oder mehrere der folgenden Elemente umfassen:
Aufenthaltsort des besagten Kommunikationsendgeräts, aktuelle Uhrzeit und eine vom Benutzer bereitgestellte Information.

4. Verfahren nach einem der vorstehenden Ansprüche, wobei sich die besagte Datenbank auf einem oder mehreren Servern, auf welche das Kommunikationsendgerät über ein Telekommunikationsnetzwerk zugreifen kann, befindet, um eine gemeinsame Nutzung mit mindestens einem anderen von dem besagten Benutzer verwendbaren Kommunikationsendgerät zu ermöglichen.

5. Verfahren nach einem der vorstehenden Ansprüche, wobei die besagte Darstellung durch eine Anzeige von grafischen Elementen, welche den besagten Anwendungen entsprechen, in einem vordefinierten Abschnitt der grafischen Schnittstelle des besagten Kommunikationsendgeräts erfolgt.

6. Verfahren nach einem der vorstehenden Ansprüche, weiterhin umfassend einen Schritt des Rückgewinnens eines zweiten Satzes von kontextbezogenen Anwendungsgruppen, welche mit einem zweiten Benutzer assoziiert sind, aus einer Datenbank.

7. Verfahren nach dem vorstehenden Anspruch, wobei der besagte zweite Satz vor dessen Darstellung für den besagten Benutzer verarbeitet wird, um den mit der besagten Gruppe assoziierten Kontext an die dem besagten Benutzer eigenen Informationen anzupassen.

8. Verfahren nach einem der Ansprüche 6 oder 7, wobei der besagte Benutzer und der besagte zweite Benutzer über ein soziales Netzwerk miteinander verbunden sind, und wobei die Rückgewinnung des besagten zweiten Satzes dynamisch erfolgt.

9. Verfahren nach einem der Ansprüche 6 oder 7, wobei der besagte zweite Satz auf ausdrückliche Aufforderung des besagten zweiten Benutzers übertragen wird.

10. Kommunikationsendgerät (T), welches über Verarbeitungsmittel (TRT) verfügt, die für das Ausführen von Anwendungen vorgesehen sind, **dadurch gekennzeichnet, dass** es über eine grafische Schnittstellte (V) verfügt, welche das Bilden zumindest einer Gruppe von Anwendungen durch Auswählen einer oder mehrerer Anwendungen und Zuordnen der besagten einen oder mehreren Anwendungen zu einer Gruppe unter den besagten mindestens einen Anwendungsgruppen ermöglicht, wobei das besagte Endgerät weiterhin Mittel (TRT, V) zum Assoziieren der besagten mindestens eine Anwendungsgruppe mit einem vom Benutzer des besagten Kommunikationsendgeräts bestimmten Kontext, um mindestens eine kontextbezogene Anwendungsgruppe zu bilden, eine Datenbank (B) zum Speichern der besagten mindestens einen kontextbezogenen Anwendungsgruppe, Mittel (TRT, V) zum Ermitteln eines dynamischen Kontextes aus kontextbezogenen Informationen, und Mittel zum Rückgewinnen eines Satzes von kontextbezogenen Anwendungsgruppen, welche dem besagten dynamischen Kontext entsprechen, aus der besagten Datenbank besitzt, und wobei die besagte grafische Schnittstelle für die Darstellung des besagten Satzes von kontextbezogenen Anwendungsgruppen für den besagten Benutzer vorgesehen ist.

11. Computerprogramm, welches über Mittel zum Durchführen des Verfahrens gemäß einem der Ansprüche 1 bis 9 verfügt.

## Claims

1. A method for managing a set of applications accessible from a communication terminal, **characterized in that** the method comprises the following steps:
- a step (E1) of forming at least one group of applications by selecting one or more applications and assigning said one or more applications to a group from among said at least one group of applications,
- a step (E2) of associating said at least one group of applications with a context determined by the user of said communication terminal, in order to form at least one contextualized group of applications,
- a step (E3) of saving said at least one contextualized group of applications in a database,
- a step (E4) of determining a dynamic context from contextual information provided by said communication terminal,
- a step (E5) of retrieving from said database a set of contextualized groups of applications corresponding to said dynamic context,
- a step (E6) of presenting said user with said set of contextualized application groups.

2. A method according to the preceding claim, further comprising steps of
- transmitting a contextualized group of applications to another user,
- processing said contextualized group of applications by a communication terminal of said other user, in order to adapt the context associated with said group to information specific to said other user.

3. A method according to one of the preceding claims, wherein said contextual information comprises one or more elements chosen from among the location of said communication terminal, the current time, and a piece of information provided by the user.

4. A method according to one of the preceding claims, wherein said database is located on one or more servers accessible to the communication terminal by a telecommunication network, in order to enable sharing with at least one other communication terminal usable by said user.

5. A method according to one of the preceding claims, wherein said presentation consists of a display of graphical elements corresponding to said applications within a predefined portion of the graphical user interface of such communication terminal.

6. A method according to one of the preceding claims, further comprising a step of retrieving a second set of contextualized groups of applications from a database associated with a second user.

7. A method according to the preceding claim, wherein before being presented to said user, said second set undergoes processing in order to adapt the context associated with said group to information specific to said user.

8. A method according to one of the claims 6 or 7, wherein said user and said second user are linked by a social network and wherein the retrieval of said second set is carried out dynamically.

9. A method according to one of the claims 6 or 7, wherein said second set is transmitted upon the express request of said second user.

10. A communication terminal (T) equipped with means of processing (TRT) intended to implement applications and equipped with a graphical user interface (V) enabling the formation of at least one group of applications by selecting one or more applications and assigning said one or more applications to a group chosen from said at least one group of applications, said terminal further possessing means (TRT, V) for associating the at least one group of applications with a context determined by the user of the communication terminal, in order to form at least one contextualized group of applications, a database (B) for saving said at least one contextualized group of applications, means (TRT, V) for determining a dynamic context from contextual information, means for retrieving within said database a set of contextualized groups of applications corresponding to said dynamic context, and said graphical user interface being intended to present the user with said set of contextualized groups of applications.

11. A computer program equipped with means to implement the method according to one of the claims 1 to 9.
